# EUROPÄISCHE PATENTSCHRIFT

(11) **EP 2 591 046 B1**
(45) Veröffentlichungstag und Bekanntmachung des Hinweises auf die Patenterteilung: **13.04.2016**
(21) Anmeldenummer: 11732348.5
(22) Anmeldetag: 08.07.2011
(51) Int. Cl.: C08K 5/053, C08K 5/09, C09J 111/02, C09J 11/06

(54) **KLEBSTOFF MIT PUFFERSYSTEM**
ADHESIVE WITH BUFFER SYSTEM
COLLE DOTÉE D'UN SYSTÈME TAMPON

(30) Priorität: 09.07.2010 EP 10405132
(43) Veröffentlichungstag der Anmeldung: 15.05.2013
(73) Patentinhaber: Alfa Klebstoffe AG, 8197 Rafz (CH)
(72) Erfinder: SIMMLER-BORNHAUSER, Emil, CH-8454 Buchberg (CH); SIMMLER-CADUFF, Thomas, CH-8194 Hüntwangen (CH)
(74) Vertreter: Roshardt, Werner Alfred
(86) Internationale Anmeldenummer: PCT/CH2011/000161
(87) Internationale Veröffentlichungsnummer: WO 2012/003596

(56) Entgegenhaltungen:
- EP-A1- 1 099 740
- WO-A1-03/055471
- US-A- 6 086 997
- US-B1- 6 319 352
- E. Schwab: "Glycerol", Römpp online , 07-01466, Mai 2004 (2004-05), XP000002659117, Gefunden im Internet: URL:http://www.roempp.com [gefunden am 2011-09-14]

## Beschreibung

### Technisches Gebiet

Die Erfindung betrifft einen Klebstoff auf der Basis einer Polychloropren-Dispersion sowie die Verwendung eines Puffersystems zur Aktivierung und Stabilisierung eines Klebstoffs auf der Basis einer Polychloropren-Dispersion.

### Stand der Technik

Aktuell werden in der schaumstoffverarbeitenden Industrie Dispersionsklebstoffe, insbesondere wasserbasierende und lösungsmittelfreie Klebstoffe auf Basis von Polychloropren (CR) eingesetzt. Mit derartigen Klebstoffen lassen sich im Besonderen unterschiedliche Schaumstoffqualitäten zwecks Herstellung von Matratzen, Polstermöbeln, Bürostühlen, Autositzen etc. verkleben. Darüber hinaus sind diese Klebstoffe aber auch für die Herstellung von anderen technischen Produkten, wie z. B. Isolationsmaterialien, geeignet.

Typischerweise werden Polychloropren-Dispersionen zur Erreichung einer ausreichenden Initialhaftung gezielt destabilisiert oder aktiviert. Dies wird auch als "Brechen" bezeichnet. Hierfür werden bislang Säuren eingesetzt, welche ein Absenken des pH-Wertes der Klebstoffformulierung bewirken.

In der EP 0624 634 (ALFA Klebstoffe AG) wird zum Absenken des pH-Wertes Borsäure vorgeschlagen.

In der US 6,319,352 B1 (Alfa Klebstoffe AG) wird ebenfalls Borsäure erwähnt. Bei hohen Borsäure-Anteilen wird Glyzerin als "Lösungsmittel" für die Borsäure verwendet. Die EP 2 166 054 A1 (Wakol GmbH) beschreibt diesbezüglich Aminosäuren, wie z. B. Glycin, Asparagin oder Glycylglycin sowie Glyoxal, welche in Wasser gelöst zum Einsatz kommen.

Eine Mischung aus Borsäure und einer Aminosäure z. B. Glycin beschreibt die US 6,086,997 (Patel Vijay).

Die Eigenschaften und Verwendungsmöglichkeiten von Glyzerin werden z.B. im Dokument XP265 9117 aufgelistet. Unter anderem kann Glyzerin als Druckübertragungsmittel, Feuchthaltemittel, Beschlagverhinderungsmittel und Gefrierschutzmittel verwendet werden. Häufig wird es als Lösungsmittel eingesetzt.

Des Weiteren ist aus der DE 10 2008 045 805 A1 die Zugabe von gasförmigem CO₂ als sauer wirkende Verbindung bzw. Mittel zum Absenken des pH-Werts bekannt.

Alle diese Rezepturen haben jedoch gemeinsam, dass eine dauerhafte Absenkung des pH-Wertes nicht gegeben ist und damit in der Praxis etliche Probleme auftreten. D. h. die formulierten Klebstoffe kleben nach gewisser Zeit nicht mehr ausreichend, oder die Stabilität der Formulierung ist nicht gegeben, so dass sich vereinzelt oder in der ganzen Mischung Koagulate bilden, welche den Klebstoff unbrauchbar machen. Bei bekannten Rezepturen stossen insbesondere die Scherstabilität wie auch die Lager- und Transportstabilität in unbefriedigender Weise an Grenzen. Diese Problematik verschärft sich zusätzlich in kalten Jahreszeiten bei Temperaturen unter 0 °C, wodurch beim Transport und der Lagerung solcher Produkte erhöhte Anforderungen, z. B. kältegeschützte Transporte, zu erfüllen sind.

Diesbezüglich ist es zwar möglich, die Destabilisierung oder Aktivierung der Klebstoffformulierungen nach dem Zweikomponentenprinzip erst kurz vor der Verwendung vorzunehmen. Dies bedeutet aber für den Anwender einen Zusatzaufwand, welcher nach Möglichkeit vermieden werden soll.

Es besteht daher nach wie vor Bedarf nach alternativen Klebstoffformulierungen, welche die vorstehend genannten Nachteile möglichst nicht aufweisen.

### Darstellung der Erfindung

Die Aufgabe der Erfindung besteht somit in der Bereitstellung eines Klebstoffs, welcher unmittelbar nach der Auftragung eine möglichst hohe Initialhaftung aufweist und zugleich möglichst langfristig stabil ist.

Die Lösung der Aufgabe ist durch die Merkmale des Anspruchs 1 definiert. Gemäss der Erfindung enthält der Klebstoff, der auf einer Polychloropren-Dispersion basiert, ein Puffersystem, umfassend wenigstens eine saure Verbindung und Glyzerin, zur Aktivierung und Stabilisierung des Klebstoffs, wobei Glyzerin bezogen auf das Gesamtgewicht der Klebstoffdispersion einen Anteil von 14-30 Gew.-%, bevorzugt 22 - 30 Gew.-% aufweist.

Die Polychloropren-Dispersion ist eine Polymerdispersion. Mit dem Ausdruck Polymerdispersion ist insbesondere ein heterogenes Gemisch aus wenigstens einer Polymerverbindung und einer Flüssigkeit zu verstehen. Dabei ist die Polymerverbindung als dispergierte Phase möglichst fein in der Flüssigkeit als Dispersionsmedium verteilt. Mit anderen Worten bildet die Polymerdispersion eine Suspension, welche die Polymerverbindung in Kolloidform enthält. Mit Vorteil ist die Polymerdispersion eine wässrige Polymerdispersion, welche insbesondere bis auf unvermeidbare Verunreinigungen frei von organischen Lösungsmitteln ist.

Durch die Kombination mit dem erfindungsgemässen Puffersystem sind Klebstoffe auf Polychloropren-Basis zugänglich, welche gegenüber bekannten Formulierungen eine weitaus höhere Stabilität aufweisen und gleichzeitig über eine ausgezeichnete Initialhaftung verfügen.

Ein Puffersystem bezeichnet im vorliegenden Zusammenhang ein Gemisch aus wenigstens zwei Komponenten, umfassend wenigstens eine saure Verbindung und Glyzerin, welche synergetisch mit den übrigen Komponenten des Klebstoffs zusammenwirken, so dass der Klebstoff im Vergleich mit der Polychloropren-Dispersion eine erhöhte Initialhaftung bei zugleich verbesserter Stabilität aufweist. Entsprechend sind der Anteil des Puffersystems oder die Anteile der wenigstens einen sauren Verbindung und des Glyzerins im Besonderen so gewählt, dass eine erhöhte Initialhaftung bei zugleich verbesserter Stabilität erreicht wird. Dabei weist die saure Verbindung vorzugsweise einen Anteil von wenigstens 0.01 Gew.-% auf. Ein maximaler Anteil an saurer Verbindung beträgt insbesondere 10 Gew.-%. Der Anteil der sauren Verbindung wird unter anderem durch die Säurestärke bzw. den pKₛ-Wert der sauren Verbindung mitbestimmt. Der Anteil an Glyzerin beträgt mit Vorteil wenigstens 14 Gew.-%. Ein vorteilhafter Maximalwert des Anteils an Glyzerin liegt bei 30 Gew.-%.

Unter einer sauren Verbindung wird in diesem Zusammenhang eine chemische Verbindung verstanden, welche insbesondere im Sinne einer Brønstedtsäure als Protonendonor und/oder in Form einer Lewissäure als elektrophiler Elektronenakzeptor fungiert. Ebenso kann die saure Verbindung aber auch eine Substanz sein, welche durch ein Zusammenwirken mit den übrigen Komponenten des Klebstoffs eine saure Wirkung entfaltet. Die saure Verbindung kann beispielsweise eine organisch-chemische, anorganisch-chemische und/oder metallorganische Verbindung sein. Grundsätzlich kann die saure Verbindung in fester, flüssiger und/oder gasförmiger Form vorliegen bzw. beigemischt werden.

Sofern nicht anders angegeben, beziehen sich sämtliche Angaben bezüglich Gewichtsprozenten bzw. Gew.-% von einzelnen Komponenten der erfindungsgemässen Klebstoffe auf das nasse Gesamtgewicht des verwendbaren bzw. einsatzbereiten Klebstoffs.

Die erfindungsgemässen Klebstoffe auf Basis einer Polychloropren-Dispersion und eines Puffersystems, umfassend wenigstens eine saure Verbindung und Glyzerin, zeigen unter anderem überraschend hohe Initialhaftwerte und haben sich langfristig sowie unter verschiedensten äusseren Bedingungen als weitgehend stabil erwiesen. Insbesondere können mit den erfindungsgemässen Klebstoffen höhere Lager-, Transport- und Verarbeitungsstabilitäten realisiert werden. Entsprechend verfügen die erfindungsgemässen Klebstoffe auch über längere Lagerzeiten, was eine zusätzliche Flexibilität bei der Verarbeitung der Klebstoffe mit sich bringt.

Dies ist insofern überraschend, als dass bislang davon ausgegangen wurde, dass Glyzerin die Initialhaftung bei Klebstoffen grundsätzlich eher beeinträchtigt. Im Vergleich mit Klebstoffen, welche entweder nur eine saure Verbindung oder nur Glyzerin enthalten, zeigen die erfindungsgemässen Klebstoffe jedoch insbesondere eine unerwartet hohe Stabilität bei unveränderter oder verbesserter Initialhaftung.

Bezüglich Stabilität hat sich gezeigt, dass die in der Praxis entscheidenden Klebstoffeigenschaften wie z. B. die Initialhaftung, die chemische Zusammensetzung, die Viskosität oder die optische Erscheinung bis zu mehreren Monaten im Wesentlichen konstant bleiben. Dies ermöglicht es denn auch, die erfindungsgemässen Klebstoffe als Einkomponentensysteme einzusetzen, was die Handhabung für den Anwender wesentlich vereinfacht.

Insbesondere zeigen die erfindungsgemässen Klebstoffe eine signifikante Frost-Tau-Stabilität. Dies bedeutet, dass der Klebstoff eingefroren und wieder weitestgehend rückstandsfrei aufgetaut werden kann und dabei seine Eigenschaften beibehält. Die Temperatur, auf die ein erfindungsgemässer Dispersionskleber maximal abgekühlt werden kann, ist abhängig vom Glyzerin-Anteil.

Im Rahmen der Erfindung weist Glyzerin, bezogen auf das Gesamtgewicht des nassen Klebstoffs, einen Anteil von 14-30 Gew.-%, bevorzugt 22 - 30 Gew.-%, auf. Wie sich gezeigt hat, sind die erfindungsgemässen Klebstoffe Frost-Tau-stabil und zwar ohne dass dabei ihre Initialhaftung merklich beeinträchtigt würde. Dies kommt besonders unerwartet, da bislang davon ausgegangen wurde, dass derart unüblich hohe Glyzerin-Anteile zu einer massiven Reduktion der Initialhaftung führen. Im Rahmen der vorliegenden Erfindung wurde jedoch gerade das Gegenteil beobachtet, was auf das Puffersystem bzw. das Zusammenwirken der sauren Verbindung und des Glyzerins zurückzuführen sein dürfte.

Frieren Klebstoffe mit den vorstehend genannten Anteilen an Glyzerin ein, lassen sich diese rückstandfrei wieder auftauen. Dies zudem ohne dass die vorteilhaften Eigenschaften der Klebstoffe darunter leiden würden. Im Gegenteil, die Klebstoffe verfügen unmittelbar nach dem Auftauen über die benötigte Initialhaftung und können bestimmungsgemäss verwendet werden. Mit anderen Worten lassen sich die erfindungsgemässen Klebstoffe reversibel einfrieren und wieder auftauen.

Diese Eigenschaft ist im Besonderen im Hinblick auf die Lagerung und den Transport des Klebstoffs von grossem Vorteil. Bei bislang bekannten Klebstoffen, welche sich üblicherweise nicht ohne Qualitätsverlust einfrieren und auftauen lassen, erfordert insbesondere der Transport in kalten Jahreszeiten spezielle Massnahmen, sprich aufwändige und damit teure Thermotransporte. Diese Problematik entfällt mit den erfindungsgemässen Klebstoffen gänzlich, womit sich diese unter anderem wirtschaftlicher vertreiben lassen.

Einen positiven Einfluss auf die Frost-Tau-Stabilität findet man bei Glyzerin-Anteilen von 14-30 Gew.-% bezogen auf das Gesamtgewicht der Klebstoffdispersion. Höhere Anteile an Glyzerin als 50 Gew.-% sind zwar ebenfalls möglich, bringen aber bezüglich Frost-Tau-Stabilität keinen zusätzlichen Nutzen. Bei geringeren Anteilen als 8 Gew.-% an Glyzerin nimmt die Frost-Tau-Stabilität stark ab. Erhalten bleibt in diesem Fall aber die verbesserte Stabilität im Temperaturbereich über dem Gefrierpunkt. Allgemein gilt, dass mit einem abnehmenden Glyzerin-Anteil die Temperatur, bei der noch eine Frost-Tau-Stabilität vorliegt, steigt und im Allgemeinen gegen 0 °C wandert. Je weniger Glyzerin im Klebstoff vorhanden ist, umso weniger Gefrierresistenz bietet dieser Klebstoff.

Besonders bevorzugt besteht der Klebstoff aus 22 - 30 Gew.-% Glyzerin. Bei diesen Glyzerin-Anteilen kann der Klebstoff mehrmals auf unter -20 °C abgekühlt und anschliessend wieder aufgetaut werden, ohne dass sich seine Klebeeigenschaften verändern. In diesem besonders bevorzugten Bereich ist die Initialhaftung gut.

In einer bevorzugten Ausführungsform liegen die erfindungsgemässen Klebstoffe entsprechend als Einkomponentenklebstoffe vor. Für spezielle Anwendungen ist es aber prinzipiell möglich, die Klebstoffe auch als Mehrkomponentensysteme auszulegen. Gegenüber Klebstoffen ohne das erfindungsgemässe Puffersystem verfügen die erfindungsgemässen Klebstoffe zudem über verbesserte Verarbeitbarkeiten und Maschinenlaufeigenschaften. Ebenso zeigen die erfindungsgemässen Klebstoffe eine schnellere Abtrocknung bzw. Abbindung.

Gegenüber bekannten Klebstoffen, welche beispielsweise lediglich eine Säure zur Aktivierung enthalten, kann aufgrund des erfindungsgemässen Puffersystems bei gleich hoher Initialhaftung zudem die benötigte Menge an saurer Verbindung reduziert werden, was sich positiv auf die Herstellungskosten auswirkt. Dies verdeutlicht zudem das synergetische Zusammenwirken zwischen saurer Verbindung und Glyzerin bei den erfindungsgemässen Klebstoffen.

Das erfindungsgemässe Puffersystem funktioniert zudem mit einer breiten Palette an verschiedensten sauren Verbindungen und ist entsprechend flexibel einsetzbar. So ist es z. B. sekundär, in welcher Form die wenigstens eine saure Verbindung vorliegt. Selbst bei Polychloropren-Dispersion, welche mit gasförmigem CO₂ als saure Verbindung beaufschlagt werden, kann durch die Beimischung von Glyzerin bzw. die Herstellung eines erfindungsgemässen Puffersystems eine signifikante Stabilitätsverbesserungen bei hoher Initialhaftung erzielt werden.

Die erfindungsgemässen Klebstoffe sind darüber hinaus flexibel und einfach verarbeitbar. So können die Klebstoffe ohne weitere Vorbehandlung direkt mittels Spritzdüsen, Niederdruckspritzpistolen, Pinsel, Walzaggregate oder dergleichen auf ein zu verklebendes Substrat aufgetragen werden. Ein vorgängiges Beimischen von Zusatzkomponenten ist entsprechend nicht notwendig.

Im Zusammenspiel mit einer sauren Verbindung hat sich Glyzerin somit als vorteilhaftes Puffersystem bei Klebstoffen auf der Basis von Polychloropren-Dispersionen erwiesen.

Bevorzugt enthält die Polychloropren-Dispersion zusätzlich Polyacrylate, insbesondere Acrylsäureestercopolymere, Styrolacrylatcopolymere und/oder Mischungen davon. Die Polyacrylate sind dabei insbesondere in Kombination mit Polychloropren als polymere Hauptkomponente von Vorteil und wirken als zusätzliche Bindemittel. Die zusätzlichen Polyacrylate weisen insbesondere einen geringeren Anteil auf als die polymere Hauptkomponente. Durch die zusätzlichen Polyacrylate und im besonderen die genannten Vertreter können sowohl die Anfangs- als auch die Endhaftwerte der erfindungsgemässen Klebstoffe signifikant gesteigert und an unterschiedliche zu verklebende Substrate angepasst werden.

Es ist aber auch möglich, anstelle von oder zusätzlich zu Polyacrylaten andere Verbindungen zur Verbesserung der Hafteigenschaften zuzugeben.

Ebenfalls kann es vorteilhaft sein, wenn die Polychloropren-Dispersion zusätzlich eine oder mehrere Polymerverbindungen aus der Reihe Polyvinylacetat, Polyvinylbutyral und/oder Polyurethan enthält. Auch vorteilhaft können zusätzliche Polymerverbindungen in Form von Copolymeren aus Vinylacetat, Ethylenvinylacetat, Vinylbutyral und/oder Urethan sein. Dabei kann es sich im Besonderen auch um Terpolymere handeln.

Die genannten zusätzlichen Polymerverbindungen sind insbesondere in Kombination mit Polychloropren als polymere Hauptkomponente und optional zusätzlichen Polyacrylaten von Vorteil. Das Vorhandensein der zusätzlichen Polymerverbindungen verbessert insbesondere die Hafteigenschaften sowie die Beständigkeiten der Klebstoffe und ermöglicht eine Reduktion der Herstellungskosten.

Eine Zugabe von zusätzlichen Polymerverbindungen ist jedoch nicht zwingend und kann, je nach vorgesehener Anwendung des Klebstoffs, auch entfallen.

In einer bevorzugten Ausführungsform weist die wenigstens eine saure Verbindung einen pK_{S}-Wert von 2 - 10 auf. Unter dem pK_{S}-Wert ist der negative dekadische Logarithmus der Gleichgewichtskonstanten K_{S} der sauren Verbindung in Wasser bei einer Temperatur von 25 °C zu verstehen. Wie sich gezeigt hat, ergeben derartige saure Verbindungen in Kombination mit Glyzerin besonders wirksame Puffersysteme für eine Vielzahl von interessierenden Polychloropren-Dispersionen. Dadurch wird im Allgemeinen sowohl die Initialhaftung als auch die Stabilität der erfindungemässen Klebstoffe signifikant verbessert. Des Weiteren lassen sich saure Verbindungen mit einem pK_{S}-Wert von 2 - 10 bei der Klebstoffherstellung gut dosieren.

Prinzipiell können aber auch saure Verbindungen mit einem pK_{S}-Wert von weniger als 2 oder mehr als 10 eingesetzt werden. Dies kann für spezielle Klebstoffe und/oder spezielle Anwendungen unter Umständen sogar vorteilhaft sein.

Optional ist es auch möglich, nebst einer wenigstens einen sauren Verbindung mit einem pK_{S}-Wert von 2 - 10 eine oder mehrere weitere saure Verbindungen vorzusehen, welche nicht notwendigerweise einen pK_{S} im Bereich von 2 - 10 aufweisen müssen.

Besonders bevorzugt umfasst die wenigstens eine saure Verbindung einen Protonendonor. Insbesondere umfasst die wenigstens eine saure Verbindung Zitronensäure (pK_{S1} = 3.13, pK_{S2} = 4.76, pK_{S3} = 6.4), Weinsäure (pK_{S1} = 2.98, pK_{S2} = 4.34), Ascorbinsäure (pK_{S} = 4.25), Maleinsäure oder ihr Anhydrid (pK_{S1} = 1.9, pK_{S2} = 6.5), Apfelsäure (pK_{S1} = 3.46, pK_{S2} = 5.10), Aminosäuren wie z. B. Glyzin (pK_{COOH} = 2.35, pK_{NH2} = 9.78), Mononatriumdihydrogenphosphat (pK_{S1} = 7.2, pK_{S2} = 12.32) und/oder Kohlensäure (pK_{S1} = 6.35, pK_{S2} = 10.33).

Dabei ist es auch möglich, dass zwei oder mehrere Vertreter der genannten sauren Verbindungen in Kombination eingesetzt werden. Bei der Verwendung derartiger Verbindungen in Kombination mit Glyzerin treten die erfindungsgemässen Vorteile, sprich eine hohe Initialhaftung bei zugleich verbesserter Stabilität in besonderem Masse in Erscheinung. Zudem hat sich gezeigt, dass die genannten sauren Verbindungen weitgehend kompatibel sind mit einer Vielzahl von weiteren Klebstoffkomponenten. Grundsätzlich können aber anstelle von oder zusätzlich zu den vorstehend genannten Vertretern auch andere saure Verbindungen vorgesehen werden. Dies können z. B. Lewissäuren und/oder CH-acide organische Verbindungen sein.

Vorteilhafterweise verfügt die wenigstens eine saure Verbindung bezogen auf das Gesamtgewicht der Klebstoffdispersion über einen Anteil von 0.01 - 10 Gew.-%, insbesondere 0.1 - 1.5 Gew.-%. Solche Anteile ergeben in Kombination mit Glyzerin eine optimale Wirkung des Puffersystems im Klebstoff. Dies trifft insbesondere in Verbindung mit einem Anteil an Glyzerin von 22 - 30 Gew.-% zu. In diesem Fall können Klebstoffe mit unerwartet hohen Initialhaftwerten und Frost-Tau- Stabilitäten realisiert werden.

Die wenigstens eine saure Verbindung kann jedoch prinzipiell auch geringere Anteile als 0.01 Gew.-% oder höhere Anteile als 10 Gew.-% aufweisen. Im Allgemeinen nehmen jedoch in diesem Fall die erfindungsgemässen Vorteile ab.

Ein vorteilhaftes Gewichtsverhältnis von Glyzerin zur wenigstens einen sauren Verbindung liegt im Bereich von 0.8 - 500, insbesondere 5 - 300, weiter bevorzugt 10 - 100. Dadurch wird ein optimal funktionierendes Puffersystem erhalten. Es ist prinzipiell aber auch möglich, erfindungsgemässe Klebstoffe mit anderen Gewichtsverhältnissen herzustellen. Ein pH-Wert des Klebstoffs liegt mit Vorteil im Bereich von 5 - 9, besonders bevorzugt im Bereich von 7 - 9. Ein solcher pH-Wert ist insbesondere optimal, um eine hohe Initialhaftung bei gleichzeitiger Stabilität zu erreichen.

Es ist aber grundsätzlich möglich, Klebstoffe mit geringeren oder höheren pH-Werten vorzusehen.

Gemäss weiteren bevorzugten Ausführungsformen enthalten die erfindungsgemässen Klebstoffe optional wenigstens einen Emulgator, wobei der wenigstens eine Emulgator insbesondere ein Polyglykolether, Natriumlaurylsulfat und/oder Methylvinylether/Malein-säureanhydrid-Copolymer beinhaltet. Durch derartige Emulgatoren lässt sich die Stabilität der Klebstoffe weiter erhöhen und zugleich die Verarbeitbarkeit verbessern.

Grundsätzlich können derartige Emulgatoren auch weggelassen werden oder durch andere Emulgatoren ersetzt werden.

Weiter bevorzugt enthält der erfindungsgemässe Klebstoff einen optionalen Weichmacher, insbesondere einen oder mehrere Vertreter aus der Reihe Acetyltributylcitrat, Benzoate und/oder Terephtalsäuredialkylester. Wie sich gezeigt hat, sind die genannten Weichmacher insbesondere kompatibel mit dem erfindungsgemässen Puffersystem, ohne die Stabilität oder Initialhaftung zu beeinträchtigen. Vorteilhafterweise verfügt der Weichmacher über einen Anteil von 0.1 - 20 Gew.-%, insbesondere 0.1 - 10 Gew.-%, bevorzugt 0.5 - 5 Gew.-%, weiter bevorzugt 1 - 2 Gew.-%. Durch die Weichmacher werden auf ein Substrat aufgetragene Klebstofffilme flexibler, wodurch sich beispielsweise die Kunststoffhaftung erhöht.

Grundsätzlich sind Weichmacher aber nicht zwingend erforderlich. Entsprechend kann auch darauf verzichtet werden.

Weiter kann es vorteilhaft sein, dem Klebstoff Füllstoffe beizugeben. Bevorzugt handelt es sich dabei um CaCO₃, ZnO, MgO, TiO₂, ZrO₂ und/oder Talk. Dadurch lassen sich unter anderem die Herstellungskosten reduzieren. Derartige Füllstoffe sind aber optional und können gegebenenfalls auch weggelassen oder durch andere Füllstoffe ersetzt werden.

Weiter können die erfindungsgemässen Klebstoffe optional eine oder mehrere Zusatzkomponenten aus der Reihe Verdicker, Farbstoffe, Netzmittel, Harz, UV-Absorber, Entschäumer und/oder Biozide vorliegen. Dadurch können die Klebstoffe an spezifische Anforderungen oder Umwelteinflüsse angepasst werden.

Besonders geeignete Verdicker sind z. B. wässrige Dispersionen von Methylvinylether/Maleinsäureanhydrid-Copolymeren.

Aus der nachfolgenden Detailbeschreibung und der Gesamtheit der Patentansprüche ergeben sich weitere vorteilhafte Ausführungsformen und Merkmalskombinationen der Erfindung.

### Wege zur Ausführung der Erfindung

### 1. Klebstoff auf Polychloropren-Basis

In Tabelle 1 ist eine erste erfindungsgemässe Klebstoffzusammensetzung aufgeführt. Sämtliche Gewichtsanteile beziehen sich auf das nasse Gesamtgewicht des einsatzbereiten Klebstoffs. Als Polychloropren-Dispersion wird Dispercoll C84 (Bayer MaterialScience) eingesetzt, eine wässrig-kolloidale Dispersion eines Polymerisates des 2-Chlorbutadiens. Die Dispersion enthält ca. 55 Gew.-% Polymeranteil in H₂O. Das Puffersystem besteht aus Glyzerin (Gewichtsanteil 23.56 Gew.-%; 1. Pufferkomponente) und Ascorbinsäure (0.75 Gew.-%; pKₛ = 4.25; 2. Pufferkomponente) als saure Verbindung. Das Gewichtsverhältnis von Glyzerin zu Ascorbinsäure beträgt ca. 31. Der pH-Wert des Klebstoffs liegt bei etwa 8.0.

Als Emulgatoren liegen zum Einen Methylvinylether/Maleinsäureanhydrid-Copolymere (MVE/MA-Copolymere; 0.5 %-ige Lösungen in H₂O) vor. Zum Anderen wird eine 30 %-ige Lösung von Natriumlaurylsulfat in H₂O eingesetzt. Zusätzlich wird ein Natriumsalz eines sulfatierten Fettalkoholethoxylats verwendet.

Des Weiteren enthält der erste erfindungsgemässe Klebstoff Agitan 305 als Entschäumer und 0.31 Gew.-% Wasser zur Verdünnung.

Zur Herstellung der Klebstoffzusammensetzung aus Tabelle 1 werden die erwähnten Komponenten in an sich bekannter Weise miteinander vermischt.

**Tabelle 1**

| **Komponente** | **Gewichtsanteil in %** | **Funktion** |
|---|---|---|
| Polychloropren-Dispersion (CR; z. B. Dispercoll C84; 55% Polymeranteil in H₂O) | 60.47 | Polymerbasis; Bindemittel |
| Glyzerin | 23.56 | 1. Pufferkomponente |
| Ascorbinsäure | 0.75 | 2. Pufferkomponente |
| MVE/MA-Copolymer (0.5% in H₂O) | 10.99 | Emulgator |
| Natriumlaurylsulfat (30% in H₂O) | 1.31 | Stabilisator |
| Agitan 305 | 0.04 | Entschäumer |
| Wasser | 1.31 | Verdünnung |
| Natriumsalz eines sulfatierten Fettalkoholethoxylats | 1.57 | Emulgator |

Testversuche mit der ersten erfindungsgemässen Klebstoffdispersion haben eine Lagerstabilität bei Zimmertemperatur im Bereich von 6 - 8 Monaten ergeben. Zudem ist die Klebstoffdispersion weitgehend stabil gegenüber Frost. Die Dispersion friert zwar bei Temperaturen unter 0 °C ein bzw. verfestigt sich, kann aber mehrmals rückstandfrei aufgetaut werden und ist dann bestimmungsgemäss wieder verwendbar.

Die erste erfindungsgemässe Klebstoffdispersion verfügt des Weiteren über eine hohe Initialhaftung bzw. Soforthaftung nach dem Klebstoffauftrag. Dadurch können insbesondere Schaumstoffsubstrate direkt nach dem Fügen weiterverarbeitet werden, ohne dass die Gefahr besteht, dass sich die gefügten Teile verschieben. Bei der Schaumstoffverklebung ist die Initialhaftung bei Verwendung des ersten erfindungsgemässen Klebstoffs in der Regel so hoch, dass bei entsprechender Belastung die gefügten Schaumstoffsubstrate vor der Klebstoffschicht zerstört werden.

### 2. Klebstoff auf Polychloropren-Basis

Tabelle 2 gibt die Zusammensetzung eines zweiten erfindungsgemässen Klebstoffs wieder. Sämtliche Gewichtsanteile beziehen sich wieder auf das nasse Gesamtgewicht des einsatzbereiten Klebstoffs. Als Polychloropren-Dispersion wird auch hier Dispercoll C84 (Bayer MaterialScience) eingesetzt. Das Puffersystem besteht aus Glyzerin (Gewichtsanteil 29.30 Gew.-%; 1. Pufferkomponente) und Zitronensäure (0.27 Gew.-%; pK_{S1} = 3.13, pK_{S2} = 4.76, pK_{S3} = 6.4; 2. Pufferkomponente) als saure Verbindung. Das Gewichtsverhältnis von Glyzerin zu Zitronensäure beträgt ca. 109. Der pH-Wert des Klebstoffs liegt bei etwa 8.1.

Als Emulgatoren werden Methylvinylether/Maleinsäureanhydrid-Copolymere (MVE/MA-Copolymere; 0.5 %-ige Lösungen in H₂O), Natriumlaurylsulfat (30 %-ige Lösung in H₂O) und Acetyltributylcitrat eingesetzt.

Zur Einstellung der richtigen Viskosität dienen Mowidick EMS 6 als Verdicker, 0.10 Gew.-% Wasser zur Verdünnung und Dispercoll S 5005, eine wässrige anionische kolloiddisperse Lösung von amorphem Siliziumoxid.

Der Klebstoff mit der Zusammensetzung gemäss Tabelle 2 wird aus den aufgezählten Komponenten in an sich bekannter Weise durch Vermischen hergestellt.

**Tabelle 2**

| **Komponente** | **Gewichtsanteil in %** | **Funktion** |
|---|---|---|
| Polychloropren-Dispersion (CR; z. B. Dispercoll C84; 55% Polymeranteil in H₂O) | 53.92 | Polymerbasis; Bindemittel |
| Glyzerin | 29.30 | 1. Pufferkomponente |
| Zitronensäure | 0.27 | 2. Pufferkomponente |
| MVE/MA-Copolymer (0.5% in H₂O) | 11.23 | Emulgator |
| Natriumlaurylsulfat (30% in H₂O) | 2.10 | Stabilisator |
| Mowidick EMS 6 | 0.39 | Verdicker |
| Acetyltributylcitrat | 1.76 | Emulgator |
| Dispercoll S 5005 | 0.94 | Viskositätseinstellung |
| Wasser | 0.10 | Verdünnung |

Die Eigenschaften der zweiten erfindungsgemässen Klebstoffdispersion hinsichtlich der Lagerstabilität bei Zimmertemperatur sowie der Frost-Tau-Stabilität sind vergleichbar mit denen der ersten erfindungsgemässen Klebstoffdispersion. Zudem verfügt auch die zweite erfindungsgemässe Klebstoffdispersion über eine hohe Initialhaftung bzw. Soforthaftung nach dem Klebstoffauftrag.

### 3. Klebstoff auf Polychloropren-Basis

In Tabelle 3 ist eine dritte erfindungsgemässe Klebstoffzusammensetzung aufgeführt. Als Polychloropren-Dispersion wird Dispercoll C84 (Bayer MaterialScience) mit ca. 55 Gew.-% Polymeranteil in H₂O eingesetzt. Das Puffersystem besteht aus Glyzerin (Gewichtsanteil 29.5 Gew.-%; 1. Pufferkomponente) und Zitronensäure (0.3 Gew.-%; pK_{S1} = 3.13, pK_{S2} = 4.76, pK_{S3} = 6.4; 2. Pufferkomponente) als saure Verbindung. Das Gewichtsverhältnis von Glyzerin zu Zitronensäure beträgt ca. 98. Der pH-Wert des Klebstoffs liegt bei etwa 8.

Weiter enthält der Klebstoff Verdicker zur Einstellung der Viskosität. Hierfür ist z. B. eine wässrige anionische kolloiddisperse Lösung von amorphem Siliziumoxid (z. B. Dispercoll S 3030; Bayer MaterialScience) in Kombination mit wässrigen Dispersionen von Methylvinylether/Maleinsäureanhydrid-Copolymeren (z.B. Mowilith EMS 6; Celanese Emulsions; ca. 6% Feststoffanteil) vorgesehen.

Als Emulgatoren liegen zum Einen Methylvinylether/Maleinsäureanhydrid-Copolymere (MVE/MA-Copolymere; 0.5 %-ige Lösungen in H₂O) vor. Zum Anderen wird eine 30%-ige Lösung von Natriumlaurylsulfat in H₂O eingesetzt.

Des Weiteren enthält der dritte erfindungsgemässe Klebstoff Acetyltributylcitrat als Weichmacher und ein Biozid auf Basis von Chlormethyl-/Methylisothiazolon und Bronopol. Letzteres ist beispielsweise unter dem Namen Rocima 520 bei Rohm and Haas erhältlich.

**Tabelle 3**

| **Komponente** | **Gewichtsanteil in %** | **Funktion** |
|---|---|---|
| Polychloropren-Dispersion (CR; z. B. Dispercoll C84; 55% Polymeranteil in H₂O) | 53.1 | Polymerbasis; Bindemittel |
| Glyzerin | 29.5 | 1. Pufferkomponente |
| Zitronensäure (Pulver) | 0.3 | 2. Pufferkomponente |
| Kolloidale Siliziumoxid-Lösung (z. B. Dispercoll S 3030; ca. 30% Feststoffanteil in H₂O) | 2.0 | Verdicker |
| Mowilith EMS 6 | 0.3 | Verdicker |
| Natriumlaurylsulfat (30% in H₂O) | 1.9 | Emulgator, Stabilisator |
| MVE/MA-Copolymer (0.5% in H₂O) | 11.2 | Emulgator |
| Acetyltributylcitrat | 2.0 | Weichmacher |
| Biozid auf Basis Chlormethyl-/Methylisothiazolon und Bronopol (z. B. Rocima 520) | 0.1 | Konservierung |

Auch die dritte erfindungsgemässe Klebstoffdispersion weist alle erwähnten vorteilhaften Eigenschaften auf.

### 4. Klebstoff auf Polychloropren-Basis

In der Tabelle 4 ist ein Beispiel eines Klebstoffes mit einem etwas niedrigeren Anteil an Glyzerin angegeben. Die Frost-Tau-Stabilität dieses Klebstoffs ist im Vergleich zu den ersten drei Beispielen etwas gemindert. Der Klebstoff kann bei Minus-Temperaturen bis zu ca. -10 °C sicher verwendet werden.

**Tabelle 4**

| **Komponente** | **Gewichtsanteil in %** | **Funktion** |
|---|---|---|
| Polychloropren-Dispersion (CR; z. B. Dispercoll C84; 55% Polymeranteil in H₂O) | 49.63 | Polymerbasis; Bindemittel |
| Glyzerin | 16.54 | 1. Pufferkomponente |
| Zitronensäure | 0.3 | 2. Pufferkomponente |
| Dispercoll S 5005 | 0.35 | Viskositätseinstellung |
| Natriumlaurylsulfat (30% in H₂O) | 0.96 | Stabilisator |
| MVE/MA-Copolymer (0.5% in H₂O) | 9.58 | Emulgator |
| Acetyltributylcitrat | 0.35 | Weichmacher |
| Natriumsalz eines sulfatierten Fettalkoholethoxylats | 0.52 | Emulgator |
| Wasser | 21.77 | Verdünnung |

### 5. Klebstoff auf Polychloropren-Basis

In der Tabelle 5 findet man ein Beispiel eines Klebers auf Polychloropren-Basis mit einem erhöhten Glyzerin-Anteil von ca. 37 Gew.-%. Dieser Klebstoff weist eine besonders gute Frost-Tau-Stabilität auf (unter -20 °C), auch wenn er im Vergleich zu den Beispielen 1-3 langsamer trocknet.

**Tabelle 5**

| **Komponente** | **Gewichtsanteil in %** | **Funktion** |
|---|---|---|
| Polychloropren-Dispersion (CR; z. B. Dispercoll C84; 55% Polymeranteil in H₂O) | 44.63 | Polymerbasis; Bindemittel |
| Glyzerin | 36.98 | 1. Pufferkomponente |
| Zitronensäure | 0.29 | 2. Pufferkomponente |
| Dispercoll S 5005 | 2.17 | Viskositätseinstellung |
| Natriumlaurylsulfat (30% in H₂O) | 7.01 | Stabilisator |
| MVE/MA-Copolymer (0.5% in H₂O) | 7.01 | Emulgator |
| Acetyltributylcitrat | 1.91 | Weichmacher |

### 6. Klebstoff auf Polychloropren- und Acrylat- Basis

Tabelle 6 gibt eine sechste erfindungsgemässe Klebstoffzusammensetzung wieder. Sämtliche Gewichtsanteile beziehen sich wiederum auf das nasse Gesamtgewicht des einsatzbereiten Klebstoffs. Als Polychloropren-Dispersion wird wie bei den anderen erfindungsgemässen Klebstoffen Dispercoll C84 (Bayer MaterialScience) eingesetzt. Zusätzlich liegt eine Acrylat-Dispersion vor. Bei letzterer handelt es sich z. B. um Acronal S 600 von BASF; welche ca. 50% Acrylat in H₂O aufweist. Das Puffersystem besteht aus einer Glyzerinlösung (8.50 Gew.-%; 1. Pufferkomponente) und Zitronensäure (0.37 Gew.-%; pK_{S1} = 3.13, pK_{S2} = 4.76, pK_{S3} = 6.4; 2. Pufferkomponente) als saure Verbindung. Das Gewichtsverhältnis von Glyzerin zu Zitronensäure beträgt ca. 23.

Des Weiteren enthält der sechste erfindungsgemässe Klebstoff den Stabilisator Natriumlaurylsulfat (30% in H₂O), MVE/MA-Copolymere (0.5% in H₂O) und Acetyltributylcitrat als Emulgatoren und Dispercoll S 5005 zur Viskositätseinstellung. Der pH-Wert des Klebstoffs liegt bei etwa 8.4.

**Tabelle 6**

| **Komponente** | **Gewichtsanteil in %** | **Funktion** |
|---|---|---|
| Polychloropren-Dispersion CR (z. B. Dispercoll C84; ca. 55% Polymeranteil in H₂O) | 78.13 | Polymere Hauptkomponente; Bindemittel |
| Acrylatdispersion (z. B. Acronal S 600; ca. 50% Polymeranteil in H₂O) | 5.09 | Bindemittel Acrylsäureester |
| Glyzerin (86.5% in H₂O) | 8.5 | 1. Pufferkomponente |
| Zitronensäure (Pulver) | 0.37 | 2. Pufferkomponente |
| Natriumlaurylsulfat (30% in H₂O) | 0.59 | Stabilisator |
| MVE/MA-Copolymer (0.5% in H₂O) | 0.85 | Emulgator |
| Dispercoll S 5005 | 0.51 | Viskositätseinstellung |
| Acetyltributylcitrat | 4.76 | Emulgator |

Der sechste erfindungsgemässe Klebstoff weist eine eingeschränkte Froststabilität bei Temperaturen bis -5 °C auf. Testversuche zur Lagerstabilität bei Zimmertemperatur sowie zur Initialhaftung haben im Wesentlichen gleiche Resultate wie mit den Polychloroprenbasierten Klebstoffdispersionen ergeben.

### 7. Klebstoff auf Polychloropren- und Acrylat- Basis

Tabelle 7 gibt eine siebte erfindungsgemässe Klebstoffzusammensetzung wieder, deren Basis aus Polychloropren und Acrylat gebildet wird. Das Puffersystem besteht aus einer Glyzerinlösung (86.5% Glyzerin in H₂O; 1. Pufferkomponente) und Zitronensäure (2.3 Gew.-%; pKₛ = 9.14; 2. Pufferkomponente) als saure Verbindung. Der Gewichtsanteil an reinem Glyzerin im Klebstoff beträgt entsprechend ca. 16.7 Gew.-%. Das Gewichtsverhältnis von Glyzerin zu Zitronensäure beträgt ca. 7. Des Weiteren enthält der siebte erfindungsgemässe Klebstoff Acetyltributylcitrat als Weichmacher und Mowilith EMS 6 als Verdicker. Der pH-Wert des Klebstoffs liegt bei etwa 7.5.

**Tabelle 7:**

| **Komponente** | **Gewichtsanteil in %** | **Funktion** |
|---|---|---|
| Polychloropren-Dispersion CR (z. B. Dispercoll C84; ca. 55% Polymeranteil in H₂O) | 58.4 | Polymere Hauptkomponente; Bindemittel |
| Acrylatdispersion (z. B. Acronal S 600; ca. 50% Polymeranteil in H₂O) | 20.9 | Zusätzliches Bindemittel |
| Glyzerin (86.5% in H₂O) | 16.7 | 1. Pufferkomponente |
| Zitronensäure | 2.3 | 2. Pufferkomponente |
| Mowilith EMS 6 | 2.1 | Verdicker |
| Acetyltributylcitrat | 1.7 | Weichmacher |

Testversuche mit der siebten erfindungsgemässen Klebstoffdispersion haben im Wesentlichen gleiche Resultate wie mit den ersten drei Klebstoffdispersionen ergeben. Durch die hohen Glyzerin-Anteile ist die Frost-Tau-Stabilität des Klebstoffs auch bei Temperaturen bis zu -20 °C sichergestellt.

### Vergleichsversuche

Zu Vergleichszwecken wurden mehrere weitere Testversuche durchgeführt. In einer ersten Reihe von Vergleichsversuchen wurden bei den Rezepturen der erfindungsgemässen Klebstoffdispersionen Glyzerin als Pufferkomponente weggelassen. Dabei haben sich die Lagerstabilitäten signifikant verschlechtert. Glyzerin-freie Klebstoffdispersionen neigen schon nach wenigen Tagen oder Wochen zur Koagulation und werden unbrauchbar. Des Weiteren sind die Klebstoffdispersionen ohne Glyzerin nicht stabil gegenüber Frost. Beim Auftauen wurden Rückstände durchwegs beobachtet, welche die Qualität der Klebstoffdispersionen zumindest stark vermindern. Des Weiteren zeigen die Rezepturen ohne Glyzerin eine reduzierte Initialhaftung.

In einer zweiten Reihe von Vergleichsversuchen wurde bei den erfindungsgemässen Polychloropren-Dispersionen der Anteil an Glyzerin variiert und der Einfluss des Glyzerin-Anteils auf die Klebeeigenschaften bei -20 °C untersucht. In Tabelle 8 sind die Eigenschaften eines Klebstoffs auf Polychloropren-Basis bei Glyzerin-Anteilen zwischen 5 und 40 Gew.-% zusammengefasst. Das Puffersystem besteht neben dem Glyzerin aus Zitronensäure, die insgesamt zu 0.378 Gew.-% vorliegt.

Die Initialhaftung wird auf einer subjektiven Skala von 1-10 bewertet, wobei keine Initialhaftung mit 1 bewertet wird. Ein verwendbarer Kleber weist üblicherweise Werte im Bereich 4 - 6 (zufriedenstellend - sehr gut) auf.

**Tabelle 8:**

| **Gew.-% Glyzerin** | **Initialhaftung** | **Frost-Tau-Stabilität bei -20 °C** |
|---|---|---|
| 5 | 6, korrigierbar | nein |
| 10 | 6, korrigierbar | nein |
| 15 | 5.5 | nein |
| 20 | 5, beisst beim 2.Mal besser | nein |
| 25 | 5 | ja |
| 30 | 4 - 5 | ja |
| 35 | 3 | ja |
| 40 | 2 | ja |

Tabelle 9 zeigt ebenfalls die Eigenschaften eines Klebstoffs auf Polychloropren-Basis. Zusätzlich liegt aber eine Acrylat-Dispersion vor. Die Klebe-Eigenschaften des Dispersionsklebers bei Glyzerin-Anteilen zwischen 5 und 40 Gew.-% sind zusammengefasst. Das Puffersystem enthält neben Glyzerin auch Zitronensäure, die zu einem Anteil von 0.378 Gew.-% vorliegt.

**Tabelle 9:**

| **Gew.-% Glyzerin** | **Initialhaftung** | **Frost-Tau-Stabilität bei -20 °C** |
|---|---|---|
| 5 | 6, zieht Kleber gegenüber ab | nein |
| 10 | 6, Fadenbildung | nein |
| 15 | 5.5, nicht korrigierbar | nein |
| 20 | 5 | nein |
| 25 | 4.5 | ja |
| 30 | 3.5 - 4 | ja |
| 35 | 3 | ja |
| 40 | 2 | ja |

Beide Versuchsreihen zeigen, dass Rezepturen mit sehr kleinen Glyzerin-Anteilen über keine Frost-Tau-Stabilität bei -20 °C verfügen. So werden z. B. bei den Rezepturen mit einem Glyzerin-Anteil von 5 Gew.-% beim Auftauen durchwegs Rückstände festgestellt, welche die Qualität der Klebstoffdispersionen zumindest stark vermindern. Die Initialhaftung verbleibt jedoch auf einem hohen Niveau.

Bei Klebstoff-Rezepturen mit einem Glyzerin-Anteil unter 22 Gew.-%, vor allem im Bereich 14 - 22 Gew.-%, aber auch im Bereich von 8 - 14 Gew.-%, findet man eingeschränkte Frost-Tau-Stabilitäten. Dies bedeutet, dass diese Klebstoffe bei geringem Frost einsetzbar sind, z. B. bei -10 °C. Die Initialhaftung wird von diesen Glyzerin-Anteilen nicht beeinträchtigt.

Im besonders bevorzugten Bereich von 22 - 30 Gew.-% Glyzerin liegen eine gute Frost-Tau-Stabilität bei -20 °C und gleichzeitig eine gute Initialhaftung vor.

In der Praxis besonders bevorzugt sind Glyzerin-Anteile von 12 - 40 Gew.-%, insbesondere 14 - 30 Gew.-%.

Klebstoffe mit Glyzerin-Anteilen über 30 Gew.-%, vor allem im Bereich 30 - 40 Gew.-% weisen ebenfalls eine gute Frost-Tau-Stabilität auf. Allerdings ist bei diesen Rezepturen die Initialhaftung eingeschränkt, das Abbinden des Klebstoffes ist damit verlangsamt. Ein solcher Kleber bietet Vorteile bei sehr tiefen Temperaturen (unter -20 °C), auch wenn der Klebeprozess länger dauert.

Eine noch extremere Frost-Tau-Stabilität kann durch Glyzerin-Anteile von 40 - 50 Gew.-% erzielt werden. Nachteilig ist jedoch, dass ein derartig formulierter Kleber eine schlechte Initialhaftung aufweist und zudem sehr langsam trocknet. Bei noch höheren Glyzerin-Anteilen sind die Klebeeigenschaften nicht mehr ausreichend.

In weiteren Versuchen wurde der für eine bestimmte Temperatur notwendige Glyzerin-Anteil ermittelt.

Für einen Klebstoff gemäss erster erfindungsgemässer Klebstoffzusammensetzung, der auf Polychloropren basiert, kann eine sehr gute Frost-Tau-Stabilität bei -15 °C durch Glyzerin-Anteile von 20 Gew.-% erreicht werden. Für Frost-Tau-Stabilität bei tieferen Temperaturen (-20 °C, -25 °C und -36 °C) sind dagegen Anteile von mehr als 25 Gew.-% notwendig. Die Klebstoffe sind dabei sehr stabil.

Für einen Klebstoff auf Polychloropren- und Acrylat-Basis kann eine Frost-Tau-Stabilität bei -15 °C ebenfalls durch einen Glyzerin-Anteil von 20 Gew.-% erreicht werden. Allerdings kann das Auftauen nicht vollständig rückstandsfrei durchgeführt werden. Dies ist erst bei einem Glyzerin-Gehalt von ca. 25 Gew.-% möglich. Für eine Frost-Tau-Stabilität bei tieferen Temperaturen (-20 °C, -25 °C bzw. -36 °C) sind dagegen Anteile von mehr als 25 Gew.-% notwendig. Bei Temperaturen unter-25 °C bilden sich bereits Koagulate.

Die vorstehend genannten Ausführungsbeispiele bzw. Klebstoffdispersionen sind lediglich als illustrative Beispiele zu verstehen, welche im Rahmen der Erfindung beliebig abgewandelt werden können.

Bei den ersten fünf Klebstoffdispersionen ist es beispielsweise möglich, zusätzlich Acrylate beizumischen und/oder auf Emulgatoren, Verdicker, Biozide, Weichmacher, Entschäumer, Stabilisatoren und/oder Substanzen zur Viskositätseinstellung zu verzichten oder diese durch andere Substanzen, wie z. B. im allgemeinen Beschreibungsteil genannt, zu ersetzen. Ebenso ist es möglich, anstelle bzw. zusätzlich zu den genannten Säuren eine andere saure Verbindung vorzusehen, z. B. Zitronensäure, Weinsäure, Ascorbinsäure, Maleinsäure oder ihr Anhydrid, Apfelsäure, Aminosäuren wie z. B. Glyzin, Mononatriumdihydrogenphosphat und/oder Kohlensäure. Bei den erfindungsgemässen Klebstoffdispersionen 6 und 7 auf Basis von Polychloropren und Acrylat kann z. B. auf die Acrylate, Stabilisatoren, Emulgatoren, Weichmacher, Verdicker und/oder Substanzen zur Viskositätseinstellung verzichtet werden. Auch ist es möglich, diese Komponenten durch andere Substanzen wie z. B. im allgemeinen Beschreibungsteil genannt, zu ersetzen. Anstelle oder zusätzlich zur Zitronensäure kann zudem durch auch eine andere saure Verbindung, z. B. Weinsäure, Ascorbinsäure, Maleinsäure oder ihr Anhydrid, Apfelsäure, Aminosäuren wie z. B. Glyzin, Mononatriumdihydrogenphosphat und/oder Kohlensäure, verwendet werden. Auch denkbar ist es, den erfindungsgemässen Klebstoffdispersionen beispielsweise Polyurethane beizumischen.

Bei sämtlichen erfindungsgemässen Klebstoffdispersionen können zudem Füllstoffe, insbesondere CaCO₃, ZnO, MgO, TiO₂, ZrO₂ und/oder Talk hinzugefügt werden. Auch möglich ist die Zugabe von Zusatzkomponenten aus der Reihe Farbstoffe, Netzmittel, Harz, UV-Absorber, Entschäumer und/oder Biozide.

Zusammenfassend ist festzustellen, dass vorteilhafte Klebstoffe auf Basis von Polymerdispersionen geschaffen wurden, welche sich durch eine hohe Initialhaftung und Stabilität auszeichnen. Die Klebstoffe lassen sich aufgrund der hohen Stabilität problemlos als Einkomponentenkleber auslegen und können darüber hinaus so eingestellt werden, dass eine Frost-Tau-Stabilität erreicht wird. Letzteres vermag insbesondere die Transport- und Lagerkosten signifikant zu reduzieren.

## Patentansprüche

1. Klebstoff auf der Basis einer Polychloropren-Dispersion mit einem Puffersystem, umfassend wenigstens eine saure Verbindung und Glyzerin, zur Aktivierung und Stabilisierung des Klebstoffs, **dadurch gekennzeichnet, dass** Glyzerin bezogen auf das Gesamtgewicht des Klebstoffs als Anteil von 14 - 30 Gew.-% vorliegt.

2. Klebstoff nach Anspruch 1, wobei Glyzerin bezogen auf das Gesamtgewicht des Klebstoffs als Anteil von 22 - 30 Gew.-% vorliegt.

3. Klebstoff nach einem der Ansprüche 1 - 2, wobei die Polychloropren-Dispersion zusätzlich Polyacrylate enthält, insbesondere Acrylsäureestercopolymere, Styrolacrylatcopolymere und/oder Mischungen davon.

4. Klebstoff nach einem der Ansprüche 1 - 3, wobei die Polychloropren-Dispersion zusätzlich Polymere und/oder Copolymere aus Vinylacetat, Ethylenvinylacetat, Vinylbutyral und/oder Urethan enthält.

5. Klebstoff nach einem der Ansprüche 1 - 4, wobei die wenigstens eine saure Verbindung einen pKₛ-Wert von 2 - 10 aufweist.

6. Klebstoff nach einem der Ansprüche 1 - 5, wobei die wenigstens eine saure Verbindung Zitronensäure, Weinsäure, Ascorbinsäure, Maleinsäure, Maleinsäure-Anhydrid, Apfelsäure, Aminosäuren, insbesondere Glyzin, Mononatriumdihydrogenphosphat und/oder Kohlensäure umfasst.

7. Klebstoff nach einem der Ansprüche 1 - 6, wobei die wenigstens eine saure Verbindung bezogen auf das Gesamtgewicht der Klebstoffdispersion über einen Anteil von 0.01 - 10 Gew.-%, insbesondere 0.1 - 1.5 Gew.-%, verfügt.

8. Klebstoff nach einem der Ansprüche 1 - 7, wobei ein Gewichtsverhältnis von Glyzerin zur wenigstens einen sauren Verbindung im Bereich von 0.8 - 500, insbesondere 5 - 300, weiter bevorzugt 10 - 100 liegt.

9. Klebstoff nach einem der Ansprüche 1 - 8, wobei ein pH-Wert des Klebstoffs im Bereich von 5 - 9, bevorzugt im Bereich von 7 - 9 liegt.

10. Klebstoff nach einem der Ansprüche 1 - 9, enthaltend wenigstens einen Emulgator, wobei der wenigstens eine Emulgator insbesondere ein Polyglykalether, Natriumlaurylsulfat und/oder Methylvinylether/Maleinsäureanhydrid-Copolymer beinhaltet.

11. Klebstoff nach einem der Ansprüche 1 - 10, enthaltend einen Weichmacher, insbesondere einen oder mehrere Vertreter aus der Reihe Acetyltributylcitrat, Benzoate und/oder Terephtalsäuredialkylester.

12. Klebstoff nach einem der Ansprüche 1 - 11, enthaltend Füllstoffe in Form von CaCO₃, ZnO, MgO, TiO₂, ZrO₂ und/oder Talk.

13. Klebstoff nach einem der Ansprüche 1 - 12, wobei eine oder mehrere Zusatzkomponenten aus der Reihe Verdicker, Farbstoffe, Netzmittel, Harz, UV-Absorber, Entschäumer und/oder Biozide vorliegen.

14. Verwendung eines Puffersystems, umfassend wenigstens eine saure Verbindung und Glyzerin, zur Aktivierung und Stabilisierung eines Klebstoffs auf der Basis einer Polychloropren-Dispersion, wobei Glyzerin bezogen auf das Gesamtgewicht der Klebstoffdispersion einen Anteil von 14 - 30 Gew.-% aufweist.

15. Verwendung eines Puffersystems nach Anspruch 14, wobei Glyzerin bezogen auf das Gesamtgewicht der Klebstoffdispersion einen Anteil von 22 - 30 Gew.-% aufweist.

## Claims

1. An adhesive based on a polychloroprene dispersion with a buffer system, including at least one acid compound and glycerol, for the activation and stabilization of the adhesive, **characterized in that** glycerol is present, based on the total weight of the adhesive, as a proportion of 14 - 30% by weight.

2. The adhesive as claimed in claim 1, in which glycerol is present, based on the total weight of the adhesive, as a proportion of 22 - 30% by weight.

3. The adhesive as claimed in either of claims 1 and 2, in which the polychloroprene dispersion additionally comprises polyacrylates, in particular acrylic ester copolymers, styrene acrylate copolymers and/or mixtures thereof.

4. The adhesive as claimed in one of claims 1 to 3, in which the polychloroprene dispersion additionally comprises polymers and/or copolymers of vinyl acetate, ethylene vinyl acetate, vinyl butyral and/or urethane.

5. The adhesive as claimed in one of claims 1 to 4, in which the at least one acid compound exhibits a pK_{A} of 2 - 10.

6. The adhesive as claimed in one of claims 1 to 5, in which the at least one acid compound includes citric acid, tartaric acid, ascorbic acid, maleic acid, maleic anhydride, malic acid, amino acids, in particular glycine, monosodium dihydrogenphosphate and/or carbonic acid.

7. The adhesive as claimed in one of claims 1 to 6, in which the at least one acid compound has, based on the total weight of the adhesive dispersion, a proportion of 0.01 - 10% by weight, in particular 0.1 - 1.5% by weight.

8. The adhesive as claimed in one of claims 1 to 7, in which a ratio by weight of glycerol to the at least one acid compound lies in the range of 0.8 - 500, in particular 5 - 300 and more preferably 10- 100.

9. The adhesive as claimed in one of claims 1 to 8, in which a pH of the adhesive lies in the range of 5 - 9, preferably in the range of 7 - 9.

10. The adhesive as claimed in one of claims 1 to 9, comprising at least one emulsifier, in which the at least one emulsifier comprises in particular a polyglycol ether, sodium lauryl sulfate and/or methyl vinyl ether/maleic anhydride copolymer.

11. The adhesive as claimed in one of claims 1 to 10, comprising a plasticizer, in particular one or more representatives from the series tributyl acetylcitrate, benzoates and/or dialkyl terephthalates.

12. The adhesive as claimed in one of claims 1 to 11, comprising fillers in the form of CaCO₃, ZnO, MgO, TiO₂, ZrO₂ and/or talc.

13. The adhesive as claimed in one of claims 1 to 12, in which one or more extra components from the series thickeners, colorants, wetting agents, resins, UV absorbers, antifoaming agents and/or biocides are present.

14. The use of a buffer system, including at least one acid compound and glycerol, for the activation and stabilization of an adhesive based on a polychloroprene dispersion, in which glycerol exhibits, based on the total weight of the adhesive dispersion, a proportion of 14 - 30% by weight.

15. The use of a buffer system as claimed in claim 14, in which glycerol exhibits, based on the total weight of the adhesive dispersion, a proportion of 22 - 30% by weight.

## Revendications

1. Adhésif à base d'une dispersion de polychloroprène, dotée d'un système tampon, comprenant au moins un composé acide et de la glycérine, pour l'activation et la stabilisation de l'adhésif, **caractérisée en ce que** la glycérine est présente, par rapport au poids total de l'adhésif, en une proportion de 14 à 30 % en poids.

2. Adhésif selon la revendication 1, dans laquelle la glycérine est présente, par rapport au poids total de l'adhésif, en une proportion de 22 à 30 % en poids.

3. Adhésif selon l'une quelconque des revendications 1 à 2, dans laquelle la dispersion de polychloroprène contient en outre des polyacrylates, notamment des copolymères d'esters de l'acide acrylique, des copolymères d'acrylate de styrène et/ou leurs mélanges.

4. Adhésif selon l'une quelconque des revendications 1 à 3, dans laquelle la dispersion de polychloroprène contient en outre des polymères et/ou des copolymères d'acétate de vinyle, d'éthylène-acétate de vinyle, de vinylbutyral et/ou d'uréthane.

5. Adhésif selon l'une quelconque des revendications 1 à 4, dans laquelle ledit au moins un composé acide présente une valeur pK_{S} de 2 à 10.

6. Adhésif selon l'une quelconque des revendications 1 à 5, dans laquelle ledit au moins un composé acide comprend de l'acide citrique, de l'acide tartrique, de l'acide ascorbique, de l'acide maléique, de l'anhydride de l'acide maléique, de l'acide malique, des acides aminés, notamment de la glycine, du dihydrogénophosphate de monosodium et/ou de l'acide carbonique.

7. Adhésif selon l'une quelconque des revendications 1 à 6, dans laquelle ledit au moins un composé acide est présent, par rapport au poids total de la dispersion d'adhésif, en une proportion de 0,01 à 10 % en poids, notamment de 0,1 à 1,5 % en poids.

8. Adhésif selon l'une quelconque des revendications 1 à 7, dans laquelle un rapport en poids entre la glycérine et ledit au moins un composé acide se situe dans la plage allant de 0,8 à 500, notamment de 5 à 300, de manière davantage préférée de 10 à 100.

9. Adhésif selon l'une quelconque des revendications 1 à 8, dans laquelle le pH de l'adhésif se situe dans la plage allant de 5 à 9, de préférence dans la plage allant de 7 à 9.

10. Adhésif selon l'une quelconque des revendications 1 à 9, contenant au moins un émulsifiant, ledit au moins un émulsifiant contenant notamment un éther de polyglycol, du laurylsulfate de sodium et/ou un copolymère d'éther méthyl vinylique/anhydride de l'acide maléique.

11. Adhésif selon l'une quelconque des revendications 1 à 10, contenant un plastifiant, notamment un ou plusieurs représentants de la série constituée par le citrate d'acétyltributyle, les benzoates et/ou les esters dialkyliques de l'acide téréphtalique.

12. Adhésif selon l'une quelconque des revendications 1 à 11, contenant des charges sous la forme de CaCO₃, ZnO, MgO, TiO₂, ZrO₂ et/ou de talc.

13. Adhésif selon l'une quelconque des revendications 1 à 12, dans laquelle un ou plusieurs composants additifs de la série constituée par les épaississants, les colorants, les agents mouillants, les résines, les absorbants UV, les antimousses et/ou les biocides sont présents.

14. Utilisation d'un système tampon, comprenant au moins un composé acide et de la glycérine, pour l'activation et la stabilisation d'un adhésif à base d'une dispersion de polychloroprène, la glycérine présentant, par rapport au poids total de la dispersion d'adhésif, une proportion de 14 à 30 % en poids.

15. Utilisation d'un système tampon selon la revendication 14, dans laquelle la glycérine présente, par rapport au poids total de la dispersion d'adhésif, une proportion de 22 à 30 en poids.
